# EUROPEAN PATENT SPECIFICATION

(11) **EP 3 944 401 B1**
(45) Date of publication and mention of the grant of the patent: **02.12.2026**
(21) Application number: 20185528.5
(22) Date of filing: 13.07.2020
(51) Int. Cl.: H01M 10/613, H01M 10/625, H01M 10/627, H01M 10/647, H01M 10/6556, H01M 10/6557, H01M 10/04, H01M 50/20, H01M 50/30

(54) **COOLED BATTERY MODULE**
GEKÜHLTES BATTERIEMODUL
MODULE DE BATTERIE REFROIDI

(43) Date of publication of application: 26.01.2022
(73) Proprietor: ABB Schweiz AG, 5400 Baden (CH)
(72) Inventor: SCHULER, Gabriel, 6415 Arth (CH); HE, Minglong, 5400 Baden (CH); GILGEN, Alexander, 5507 Mellingen (CH); CASTIGLIONI, Roberto, 8051 Zurich (CH); TROENDLE, Pirmin, 79761 Waldshut-Tiengen (DE)
(74) Representative: Sykora & König Patentanwälte PartG mbB

(56) References cited:
- EP-A1- 2 575 193
- US-A1- 2011 212 355
- US-A1- 2013 316 210
- US-A1- 2016 301 051

## Description

### FIELD OF THE INVENTION

The invention relates to the field of cooling of battery cells. In particular, the invention relates to a battery module.

### BACKGROUND OF THE INVENTION

Battery cells of a battery module, such as used in electric vehicles, may generate a considerable amount of heat when being charged or discharged at high currents. To remove the heat from the battery cells, cooling means may be integrated in the battery module. Such cooling means may, for example, comprise cooling plates with integrated cooling channels for conducting a cooling fluid.

To increase the mechanical stability of the battery module, the battery cells may be arranged within a frame-like structure, which mechanically supports each of the battery cells. Depending on the complexity of such a structure, the manufacturing of the battery module may be quite time-consuming.

JP 2015-041558 A shows a battery module with a plurality of cooling plates and a plurality of batteries. Each of the batteries is stacked together with one of the cooling plates such that one side of the battery is in thermal contact with the respective cooling plate. The cooling plates each comprise a cooling channel for conducting a cooling fluid.

DE 10 2017 215 083 A1 shows a battery housing for accommodating a battery module. The battery housing comprises a bottom wall with an integrated cooling channel for conducting a cooling fluid through the bottom wall.

EP 2 575 193 A1 describes, according to the preamble of claim 1,
a battery module comprising a plurality of battery cells held in a U-shaped frame element with integrated cooling channels on its side portions. Upper ends of the side portions are each bent in such a way that a rib protrudes at each upper end from the frame element.

US 2011/212355 A1 describes a battery pack module comprising a U-shaped cooling plate assembly with a cooling channel that runs through both side walls and a base wall of the cooling plate assembly.

US 2013/316210 A1 describes a battery comprising a constraining band for compressing a stack of battery cells between two end plates.

US 2016/301051 A1 describes a battery with a gas conduit member in the form of a vent channel.

### DESCRIPTION OF THE INVENTION

It is an objective of the invention to provide a battery module with battery cells which are cooled from multiple sides and with a mechanical structure which is relatively easy to manufacture.

This objective is achieved by the subject-matter of the independent claims. Further exemplary embodiments are evident from the dependent claims and the following description.

The extent of protection is determined solely by the claims.
The embodiments described herein are illustrative examples. The battery module may be used as an electric energy storage device for any kind of electric vehicle and/or as a stationary electric energy storage. However, the battery module may also be used in other applications.

According to an embodiment of the invention, the battery module comprises a plurality of battery cells. The battery cells may be pouch cells or prismatic cells. A prismatic cell may have a substantially prismatic housing, which, for example, may be of metal sheets. In general, a battery cell may be an electrochemical cell with two electrodes and an electrolyte. The battery cell furthermore may comprise a container in which these components are accommodated, such as a pouch or a housing. Each electrode of the battery cell may be electrically connected to a terminal of the battery cell. The two terminals of the battery cell may for example protrude from the container. The battery cells may be electrically connected in series and/or in parallel with each other. Furthermore, the battery cells may be mechanically interconnected and/or stacked. In such a stack, the battery cells may be arranged one after another. The battery module may comprise one or more such stacks. The stacks may by arranged side by side and/or one after another. Different stacks may be electrically connected in series and/or in parallel with each other. It is also possible that the battery module comprises a housing in which the battery cells are accommodated. The housing may be leak-proof. The housing may comprise a support structure for mechanically supporting the battery cells. Such a support structure may for example be a frame in which the battery cells are arranged and which supports them mechanically. The frame may comprise one or more frame elements.

According to an embodiment of the invention, the battery module comprises a frame element with a U-shaped body, the U-shaped body mechanically supporting the battery cells. A frame element may be a part made of one or more metal sheets, which may be bent and/or bonded, e.g. welded. For example, the frame element may have the form of an elongated beam with a specific profile. Part of the profile may have a U-shaped cross-section, which may represent the body of the frame element. The structural shape of the frame element may for example be achieved by bending a flat metal sheet in a suitable manner. In the case where the battery cells are stacked, the frame element may longitudinally extend in a stacking direction of the battery cells. The U-shaped body may comprise two side portions, corresponding to the two vertical lines of the letter "U", and a central portion interconnecting the two side portions, corresponding to the curved line of the letter "U". Said portions of the U-shaped body may be essentially flat and/or curved. Each of the battery cells may at least partially be arranged between the two side portions of the U-shaped body. In other words, the U-shaped body may at least partially extend along a circumferential border of each of the battery cells such that each of the battery cells is at least partially enclosed by the U-shaped body. In the case of prismatic battery cells, the U-shaped body may for example extend along three different sides of each of the battery cells. Additionally to the U-shaped body, the frame element may comprise further parts, which, for example, may be bent parts formed of one of the portions of the U-shaped body or separate parts mechanically connected to the U-shaped body, such as a cover or an end plate.

According to an embodiment of the invention, a central portion and two side portions of the U-shaped body are different portions of a cooling plate with an integrated cooling channel for conducting a cooling fluid through the cooling plate. A cooling plate may be a compound of two metal sheets that are at least partially bonded together and enclose a cavity in an un-bonded region. The cavity may have the form of a cooling channel, or cooling channel structure, with an inlet and an outlet for the cooling fluid. The cooling channel may run through each of the portions of the U-shaped body that are in thermal contact with the battery cells. However, it is also possible that the cooling channel is integrated in only some of the portions of the U-shaped body. The cooling channel may also run through one or both bent portions of the cooling plate. For example, the cooling plate may be manufactured in a roll-bond process.

According to an embodiment of the invention, the central portion of the U-shaped body is connected to each of its side portions via a bent portion of the cooling plate. In other words, the cooling plate may be bent in at least two different regions. A bent portion may be a corner of the U-shaped body, at which the central portion meets with one of the side portions.

According to an embodiment of the invention, each of the battery cells is in thermal contact with the central portion and at least one of the two side portions of the U-shaped body. In other words, each of the battery cells may contact the central portion and at least one of the two side portions in such a way that heat is conducted from the battery cell, e.g. from a container or pouch of the battery cell, to the respective portion of the U-shaped body. It is possible that each of the battery cells is in thermal contact with up to four different portions of the U-shaped body, i.e. the central portion, the two side portions and a top portion, which may be formed from one or both of the side portions. Each of these portions may be in thermal contact with another portion of the battery cells, such as a cell side, cell front, cell back, cell top or cell bottom. It may be that gaps between each of the battery cells and the U-shaped body are filled with a thermally conductive material, which may also be electrically isolating. The material may be a sticking or non-sticking material or a combination of sticking and non-sticking materials, which facilitates assembly and/or disassembly of the battery module and may be used to enhance the stiffness of the mechanical assembly of the battery module. In the case where the battery cells are prismatic cells having a cell top with cell terminals, a cell bottom and two cell sides facing each other, the U-shaped body may be in thermal contact with at least three of the cell top, the cell bottom and the two cell sides of each of the battery cells.

According to an embodiment of the invention, the cooling plate is bent in at least one of the bent portions in such a way that at least one rib protrudes from the U-shaped body. The rib may extend in a longitudinal direction of the frame element. The rib may for example be formed by folding the cooling plate, i.e. by bending it with a bending angle of 180°. For example, the U-shaped body may have such a rib at each of its corners. With such ribs, the stiffness of the frame element can be increased.

According to an embodiment of the invention, the cooling plate has a flat surface on at least one of its sides, wherein each of the battery cells is in thermal contact with the flat surface of the cooling plate. It is possible that the cooling plate is formed with a flat side and a non-flat side which faces the flat side. The cooling plate may be bent in such a way that the flat side of the cooling plate represents the inner surface of the U-shaped body and, thus, faces the battery cells. This maximizes the thermal contact area between the U-shaped body and the battery cells and hence improves the cooling of the battery cells. The flat surface may as well be provided by an external surface of the cooling channel. It is also possible that the cooling plate is bent in such a way that the non-flat side of the cooling plate represents the inner surface of the U-shaped body and, thus, faces the battery cells.

According to an embodiment of the invention, the rib has a U-shaped or circular cross-section. Such cross-sections are known to increase the rigidity of a beam. The rib may have an open cross-section. Alternatively, the rib may have a closed cross-section. It is also possible that the rib has a rectangular cross-section.

According to an embodiment of the invention, the cooling channel runs through the central portion and at least one of the two side portions of the U-shaped body. It is possible that the cooling channel also runs through one or both bent portions of the U-shaped body. In this way, the central portion and the one or two side portions of the U-shaped body can be cooled by using a single cooling circuit (instead of using a separate cooling circuit for each of the portions).

According to an embodiment of the invention, the cooling plate has been formed in a roll-bond process. In such a roll-bond process, two or more sheets of metal may be passed through a pair of rollers under sufficient pressure to bond the sheets. Bonding of the sheets can be controlled by painting a pattern on one of the sheets. This has the effect that only the bare metal surfaces bond. Un-bonded portions can be inflated by heating the sheets such that the coating vaporizes. For example, the U-shaped body may be formed by bending the bonded sheets after or prior to heating them.

According to an embodiment of the invention, the battery module further comprises a vent channel for conducting gases leaking from the battery cells, the vent channel formed of a bent part of at least one of the side portions of the U-shaped body. Each of the battery cells may have a vent for releasing gases from the interior of the battery cell, e.g. due to evaporation of the electrolyte. The vent channel may be entirely formed of one or more bent parts of the U-shaped body. However, it is also possible that only a portion of the vent channel is formed by one or bent parts of the U-shaped body. For example, it is possible that one or more vent channel holders for holding a (separate) vent channel body are formed of the bent part(s) of the U-shaped body.

Additionally or alternatively to the vent channel, the battery module further may comprise a cover for covering an open side of the frame element, the cover formed of a bent part of at least one of the side portions of the U-shaped body. The cover may be formed by bending edges of the two side portions towards each other. The two side portions may partially overlap after being bent. Alternatively, the cover may be provided as a separate part. In this case, the bending edges of the frame element may be used as guides for positioning the cover relatively to the frame element and/or as fixation elements for mounting the cover to the frame element.

The vent channel may be part of the cover of the battery module. For example, the vent channel may be formed of a bent part of the cover.

According to an embodiment of the invention, the battery module further comprises a cell holder for positioning the battery cells side by side such that two adjacent battery cells are spaced apart from each other, wherein the cell holder has been formed in an injection molding process. The cell holder may be made of plastics or other materials, e.g. a composite material. The cell holder may be adapted for holding each of the battery cells at opposite sides, e.g. at the cell top and the cell bottom and/or at the two cell sides, and/or at corners of the battery cells. For example, the battery cells may each be positioned in or clipped into the cell holder individually. The cell holder may further be adapted for electrically isolating two adjacent battery cells from each other. For example, the cell holder may comprise a plurality of ribs or noses which are arranged between each pair of adjacent battery cells such that direct contact between the adjacent battery cells, e.g. (metal) cans of the battery cells, is avoided. Additionally, the cell holder may comprise mechanical and/or electrical interconnection elements for mechanically and/or electrically interconnecting the battery cells. It is possible that the interconnection elements are embedded into plastic parts of the cell holder during the injection molding process. The cell holder may comprise several cell holder parts, each of which holding the battery cells at a different side. For example, the cell holder may comprise a single part that is designed for holding all of the battery cells at once such that a stack of battery cells is formed.

According to an embodiment of the invention, the cell holder comprises a plurality of cell holder elements for holding the battery cells, wherein each of the cell holder elements is mechanically connected to at least one adjacent cell holder element. The cell holder elements may each hold one or more battery cells, e.g. two adjacent battery cells. For example, the cell holder elements may be bonded or clipped onto the battery cells. Furthermore, the cell holder elements may be stacked. For example, the cell holder elements may have mutually complementary male and female snap means, such as hooks or noses and corresponding recesses, for mechanically interconnecting the cell holder elements. The cell holder elements may be manufactured in an injection molding process. It is also possible that the cell holder elements each comprise mechanical and/or electrical interconnection elements for mechanically and/or electrically interconnecting the battery cells. These interconnection elements may be embedded into plastic parts of the cell holder element during the injection molding process.

According to an embodiment of the invention, the battery module further comprises two end plates arranged at opposite sides of the frame element. At least one of the two end plates comprises hydraulic connectors hydraulically connected to the cooling channel. Additionally or alternatively to the hydraulic connectors, at least one of the two end plates comprises electric connectors electrically connected to terminals of each of the battery cells. Alternatively, the end plates may comprise support structures for supporting the hydraulic and/or electric connectors. The end plates may be made of plastics and/or metal, e.g. sheet metal. The end plates may be used to reinforce and/or seal the frame element. The end plates may comprise fixation elements, e.g. for mounting the battery module to a rack or pack or for mounting a battery management system to the battery module. In other words, the frame element and the end plates may form a housing for the battery cells. The housing may be sealed. For example, the end plates may each be positioned at a narrow side of the frame element. The hydraulic connectors may be used to connect the cooling channel to a cooling fluid source. The electric connectors may be used to connect the terminals of the battery cells to a load and/or to a battery management system.

End plate design and main cooling frame can be arranged in a way that cooling of battery management systems parts can be provided by isolated and thermal conducting path to the main cooling frame.

It may be that further parts of the battery module, such as a battery management system, are mounted to the frame element and are in thermal contact with the frame element, e.g. with one of the cooled portions of the U-shaped body.

According to an embodiment of the invention, the hydraulic connectors and the electric connectors are arranged on one side of the frame element. The hydraulic connectors and the electric connectors may be integrated in a single end plate. The hydraulic connectors and the electric connectors may be arranged on a narrow side of the frame element. Alternatively, depending on the battery pack arrangement, the hydraulic connectors may be positioned at two different sides of the frame element.

According to an embodiment of the invention, the battery module further comprises at least one compression element, such as a compression strap or compression bar, adapted for compressing the frame element at a circumferential border of the frame element. For example, the battery module may comprise two or more compression straps, each of which tensioned around another portion of the frame element. A compression strap may be a metal strap or a belt made from natural and/or synthetic yarns. By compressing the frame element in such a way, (air) gaps between the battery cells and the frame element, i.e. the cooling plate, can be avoided. This improves the heat transfer between the battery cells and the cooling plate. Furthermore, the compression straps may be used for screwless fixation of the battery cells.

According to an embodiment of the invention, the compression element is a compression strap tensioned around the frame element and at least one strap support is arranged between the compression strap and the frame element, the strap support having a flat side and a convex side. A strap support may be a strip-shaped part. The strap support may be made of plastics or metal. The flat side may be in contact with the frame element, whereas the convex side may be in contact with the compression strap, or vice versa. By using such a strap support, the pressure caused by a compression strap can be distributed evenly over a defined area of the frame element. Alternatively or additionally to the strap support, the compression strap may be tensioned around a vent channel of the battery module, e.g. across a central portion of the vent channel.

According to an embodiment of the invention, the battery module comprises two end plates arranged at opposite sides of the frame element and one or more compression straps run across the two end plates, at least one of the two end plates comprising a tensioning device adapted for adjusting a tension of each of the compression straps. It is possible that the end plates each have a convex side which is in contact with the compression strap(s) and/or include structures adapted for guiding, aligning and/or positioning the compression strap(s). The tensioning device may comprise a movable stop for adjusting the tension. The stop may for example be moved by means of a spring or a screw. The tensioning device may be adapted for adjusting the tension for each of the compression straps individually. Alternatively, the tensioning may be done once during assembly without any option to compensate or retighten the tension of the compression strap(s).

According to an embodiment of the invention, the battery module further comprises a further frame element with a U-shaped body, the U-shaped body of the further frame element mechanically supporting the battery cells, wherein each of the battery cells is arranged between the frame element and the further frame element. The frame element and the further frame element may be arranged at opposite sides of the battery cells. The frame element and the further frame may form a shell in which the battery cells are accommodated.

According to an embodiment of the invention, a central portion and two side portions of the U-shaped body of the further frame element are different portions of a further cooling plate with an integrated cooling channel for conducting a cooling fluid through the further cooling plate, the central portion connected to each of the side portions via a bent portion of the further cooling plate. Each of the battery cells is in thermal contact with the central portion and at least one of the two side portions of the U-shaped body of the further frame element. Furthermore, the further cooling plate is bent in at least one of the bent portions in such a way that at least one rib protrudes from the U-shaped body of the further frame element.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 schematically shows a front view of a battery module according to an embodiment of the invention.
Fig. 2 schematically shows a front view of a battery module according to a further embodiment of the invention.
Fig. 3 schematically shows a front view of a battery module according to a further embodiment of the invention.
Fig. 4 schematically shows a front view of a battery module with a closed frame element according to an embodiment of the invention.
Fig. 5 schematically shows a front view of a battery module with two frame elements according to an embodiment of the invention.
Fig. 6 schematically shows a front view of a battery module with two frame elements according to a further embodiment of the invention.
Fig. 7 schematically shows a front view of a battery module with a vent channel formed of a frame element according to an embodiment of the invention.
Fig. 8 schematically shows a front view of a battery module with a vent channel formed of two frame elements according to an embodiment of the invention.
Fig. 9a schematically shows a top view of a battery module with a stack of battery cells according to an embodiment of the invention.
Fig. 9b schematically shows a side view of the battery module of fig. 9a.
Fig. 10a schematically shows a top view of a battery module with two stacks of battery cells according to an embodiment of the invention.
Fig. 10b schematically shows a side view of the battery module of fig. 10a.
Fig. 11a schematically shows a top view of a battery module with two stacks of battery cells according to a further embodiment of the invention.
Fig. 11b schematically shows a side view of the battery module of fig. 11a.
Fig. 12 schematically shows a top view of a battery module with two stacks of battery cells according to a further embodiment of the invention.
Fig. 13a schematically shows a top view of a battery module with two stacks of battery cells according to a further embodiment of the invention.
Fig. 13b schematically shows a side view of the battery module of fig. 13a.
Fig. 14 schematically shows a perspective view of a battery module with a plurality of compression straps according to an embodiment of the invention.
Fig. 15 schematically shows a perspective view of a battery module with a plurality of compression straps according to a further embodiment of the invention.
Fig. 16 schematically shows a side view of a strap support for a battery module according to an embodiment of the invention.
Fig. 17 schematically shows a side view of a strap support for a battery module according to a further embodiment of the invention.
Fig. 18 schematically shows a front view of the battery module of fig. 14 together with a tensioning device.
Fig. 19 schematically shows a section view of the battery module of fig. 18 along line B-B.
Fig. 20 schematically shows a section view of the battery module of fig. 18 along line B-B with a spring.
Fig. 21 schematically shows a section view of the battery module of fig. 18 along line B-B with a polymer filling.
Fig. 22 schematically shows a front view of a battery cell arrangement for a battery module according to an embodiment of the invention.
Fig. 23 schematically shows a top view of the battery cell arrangement of fig. 22.
Fig. 24 schematically shows a top view of a battery cell arrangement for a battery module according to a further embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

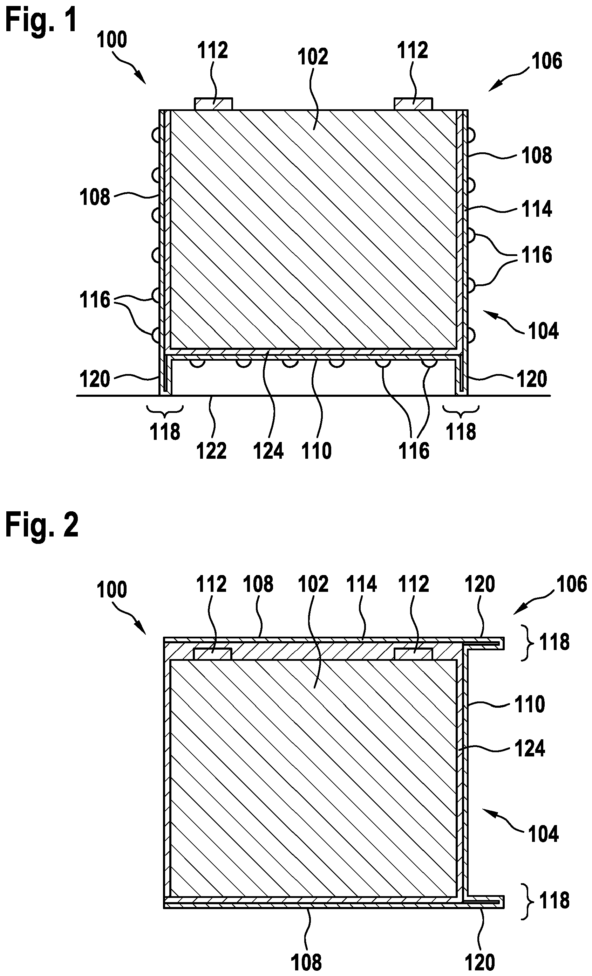

Fig. 1 schematically shows a battery module 100 from the front. The battery module 100 comprises a plurality of battery cells 102, which may be stacked (fig. 1 shows the cell front of only one of the plurality of battery cells 102). The battery cells 102 may each be prismatic cells with a rectangular shape. Alternatively, the battery module 100 may comprise pouch cells or a combination of pouch cells and prismatic cells. The battery cells 102 are arranged in a U-shaped body 104 of a frame element 106. The U-shaped body 104 comprises two side portions 108 and a central portion 110 interconnecting the two side portions 108. The battery cells 102 are arranged between the two side portions 108 and may be mechanically supported by the U-shaped body 104 at their respective cell bottom and their respective side walls. The frame element 106 may be open at a front side and a top side, the top side facing the central portion 110. The frame element 106 may also be open at a rear side (not shown).

Each of the battery cells 102 may have two terminals 112 at their respective cell top, which each are electrically connected to an electrode inside the battery cell 102. The battery cell 102 may further contain an electrolyte. The terminals 112 may protrude from the open top side of the U-shaped body 104.

The frame element 106 is formed of a cooling plate 114 with an integrated cooling channel 116 for conducting a cooling fluid through the cooling plate 114. For example, the cooling plate 114 may be fabricated in a roll-bond process and bent in shape afterwards. The cooling plate 114 may be bent in two different bending regions such that each of the side portions 112 is connected to the central portion 110 via a bent portion 118 of the cooling plate 114.

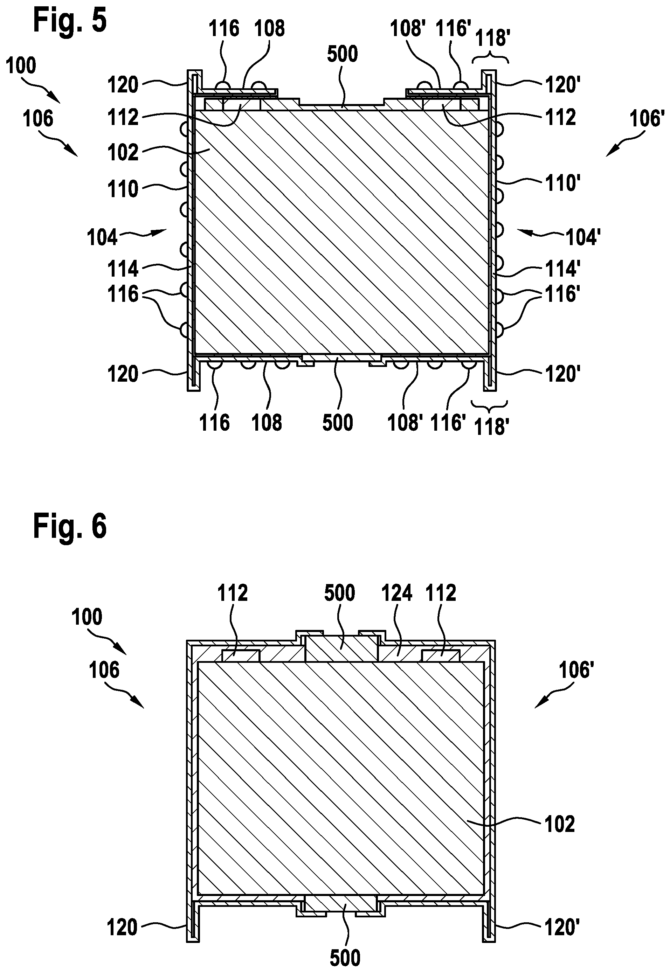

The cooling plate 114 may be bent in such a way that a rib 120 protrudes from the U-shaped body 104 at each of its two corners. The two ribs 120 may protrude in the same direction. The ribs 120 may have a U-shaped cross-section, which, for example, may be formed by bending the cooling plate 114 with a bending angle of 180°. Alternatively, the ribs 120 may have a circular cross-section (not shown). In general, the ribs 120 may be designed to increase the rigidity of the frame element 106. The ribs 120 may each extend in a longitudinal direction of the frame element 106. The ribs 120 may also protrude in opposite directions, as shown in fig. 5.

The ribs 120 may also be used as supports for positioning the battery cells 102 at a certain height above a ground 122.

As shown in fig. 1, the battery cells 102 may be in thermal contact with the central portion 110 as well as with each of the side portions 108. The cooling channel 116 may run through each of the three portions 108 and 110 such that heat generated by the battery cells 102 is effectively removed from the battery cells 102.

It is possible that the cooling channel 116 runs from each of the side portions 108 via the bent portions 118 to the central portion 110. This has the advantage that only one cooling circuit is required to transport the cooling fluid through all three portions 108 and 110 of the U-shaped body 104.

The cooling plate 114 may have a flat surface on one of its side and may be bent in such a way that the flat surface faces the battery cells 102, i.e. their respective side walls and their respective cell bottom, as shown in fig. 1.

Additionally, the battery cells 102 may be at least partially embedded in a thermally conductive and electrically isolating material 124. The material 124 may for example be a liquid gap filler or a gap pad interconnecting the flat surface of the cooling plate 114 with each of the side walls and the cell bottoms of the battery cells 102.

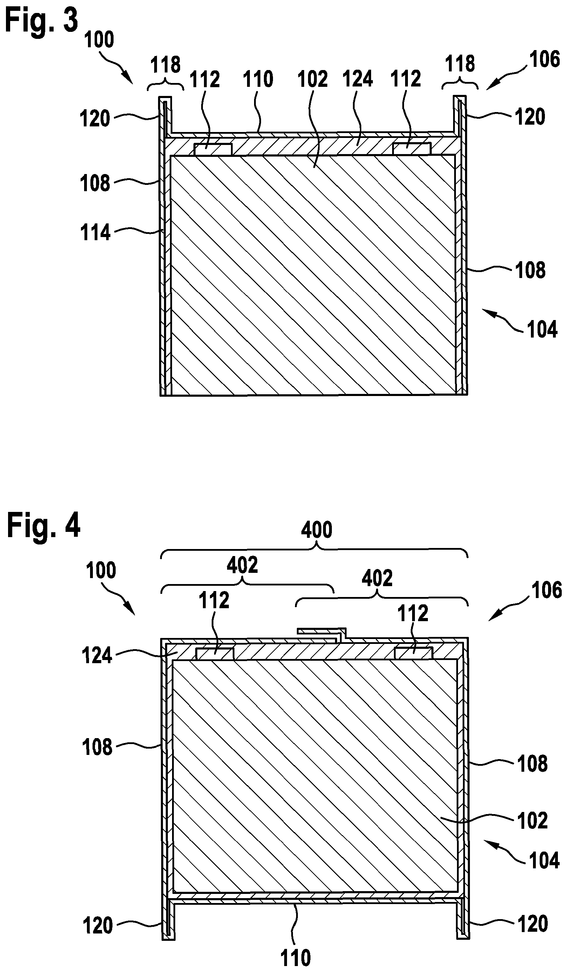

It may be that the U-shaped body 104 encloses the battery cells 102 at their cell bottom and at each of their two side walls, as shown in fig. 1. Alternatively, the U-shaped body 104 may enclose the battery cells 102 at their cell bottom, at one of their side walls and at their cell top, as shown in fig. 2, or at their cell top and at each of their two side walls, as shown in fig. 3.

Fig. 4 schematically shows the battery module 100 with a cover 400 that covers the cell top of the battery cells 102. The cover 400 may be formed of bent parts 402 of the side portions 108 of the U-shaped body 104. For example, the cover 400 may be formed by bending edges of each of the side portions 108 towards each other. The bent parts 402 of the side portions 108 may partially overlap and/or may be clicked or bonded to each other, e.g. by welding. A gap between the cell top of the battery cells 102 and the cover 400 may be partially or completely filled with the thermally conductive and electrically isolating material 124.

The cooling channel 116 may run also through the cover 400 to effectively cool the battery cells 102 at their cell top.

Fig. 5 schematically shows the battery module 100 with the frame element 106 and a further frame element 106'. The further frame element 106', which may be identical to the frame element 106, has a U-shaped body 104' composed of two side portions 108' and a central portion 110', as already described with respect to the frame element 106 of fig. 1. The two side portions 108' and the central portion 110' are different portions of a further cooling plate 114' with an integrated cooling channel 116' for conducting a cooling fluid through the further cooling plate 114'. Similar to the frame element 106, the further cooling plate 114' may have bent portions 118' in the form of ribs 120' protruding from the U-shaped body 104' at each of its corners.

The frame elements 106, 106' are arranged at opposite sides of the battery cells 102.

For example, the central portion 110 of the frame element 106 may be in thermal contact with the left side wall of each battery cell 102, whereas one of the side portions 108 of the frame element 106 may be in thermal contact with a left portion of the cell top of each battery cell 102 and another of the side portions 108 of the frame element 106 may be in thermal contact with a left portion of the cell bottom of each battery cell 102.

Accordingly, the central portion 110' of the further frame element 106' may be in thermal contact with the right side wall of each battery cell 102, whereas one of the side portions 108' of the further frame element 106' may be in thermal contact with a right portion of the cell top of each battery cell 102 and another of the side portions 108' of the further frame element 106' may be in thermal contact with a right portion of the cell bottom of each battery cell 102.

The battery cells 102 may be stacked by means of a cell holder 500, which will be described in more detail below. The cell holder 500 may be at least partially enclosed by the frame elements 106 and 106'.

Fig. 6 schematically shows an embodiment of the battery module 100 similar to the one depicted in fig. 5. In fig. 6, the frame element 106 has only one rib 120 and the further frame element 106' has only one rib 120'. The ribs 120, 120' may protrude from one side of the battery module 100, e.g. from its bottom side, and/or may substantially protrude in the same direction.

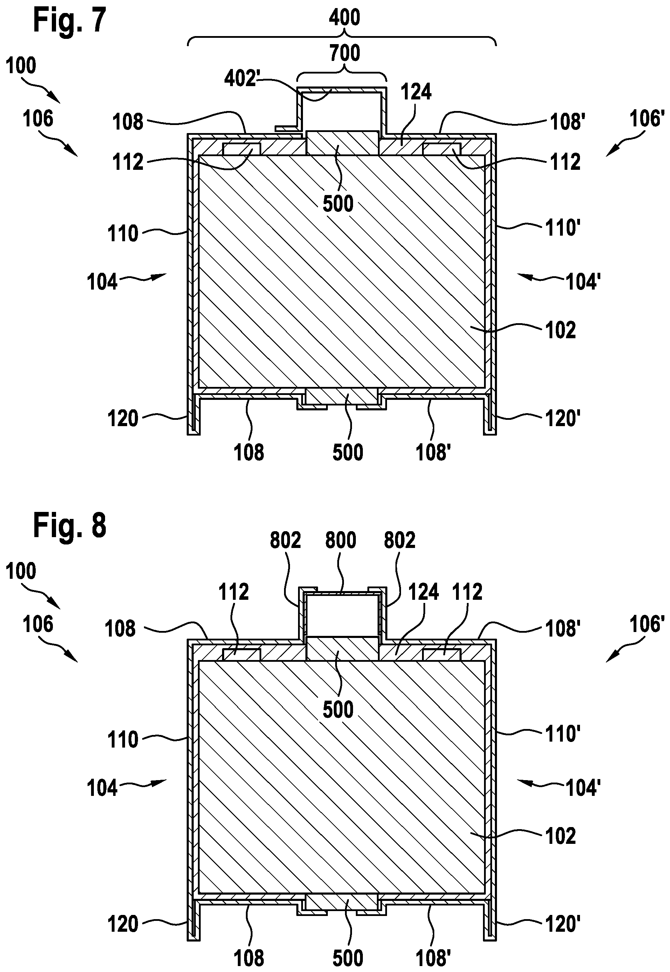

Fig. 7 schematically shows an embodiment of the battery module 100 similar to the one depicted in fig. 6. In fig. 7, the battery module 100 has a vent channel 700 for removing gases leaking from the battery cells 102. The vent channel 700 is fluidly connected to vents (not shown) of each of the battery cells 102. The vents may be positioned at the cell top of the battery cells 102 and may be part of a (prismatic) container of the battery cells 102. Accordingly, the vent channel 700 may extend at the top of the battery module 100 and/or in a longitudinal direction of the battery module 100.

Exemplarily, the vent channel 700 is formed of a bent part 402' of the side portion 108' of the U-shaped body 104' of the further frame element 106'. Alternatively, the vent channel 700 may be formed of a bent part of the side portion 108 of the U-shaped body 104 of the frame element 106 or, as shown in fig. 8, of bent parts of both side portions 108 and 108'.

It is possible that the vent channel 700 is part of the cover 400.

The vent channel 700 may be formed of a bent part in which the cooling channel 116, 116' (not shown in fig. 7) is integrated.

In fig. 8, the vent channel 700 is formed of a separate channel body 800 and two channel holders 802 that hold the channel body 800 at the top of the battery module 100. One of the channel holders 802 may be formed of a bent part of the side portion 108 of the frame element 106 and another of the channel holders 802 may be formed of a bent part of the side portion 108' of the further frame element 106'.

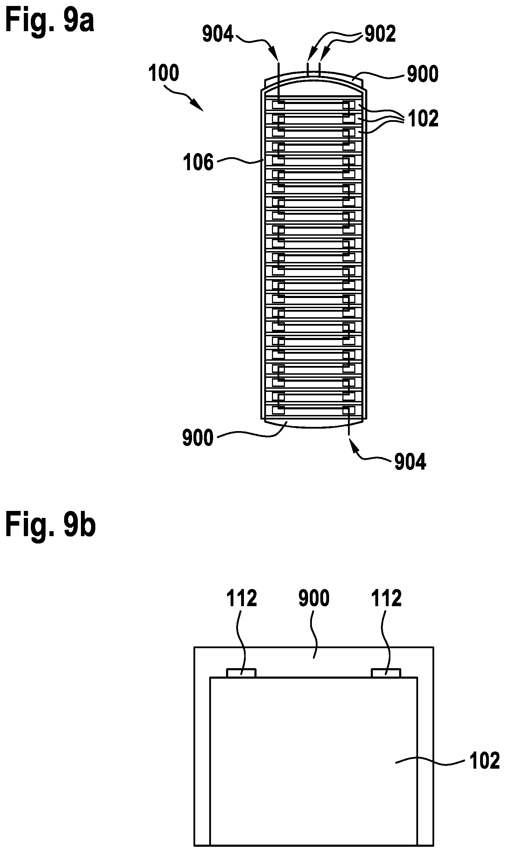

Fig. 9a schematically shows the battery module 100 from the top. The battery module 100 comprises two end plates 900 arranged at opposite sides of the frame element 106. The end frame element 106 and the end plates 900 may be components of a leak-proof housing for the battery cells 102. Each of the end plates 900 may be arranged on a narrow side of the battery module 100. One of the end plates 900 may comprise hydraulic connectors 902 which are respectively coupled to an inlet and an outlet of the cooling channel 116 (not shown) integrated in the frame element 106. Additionally to the hydraulic connectors 902, the end plate 900 may comprise at least one electric connector 904 which is electrically connected to the terminals 112 of the battery cells 102. The battery cells 102 may be series-connected and/or parallel-connected to the electric connectors 904.

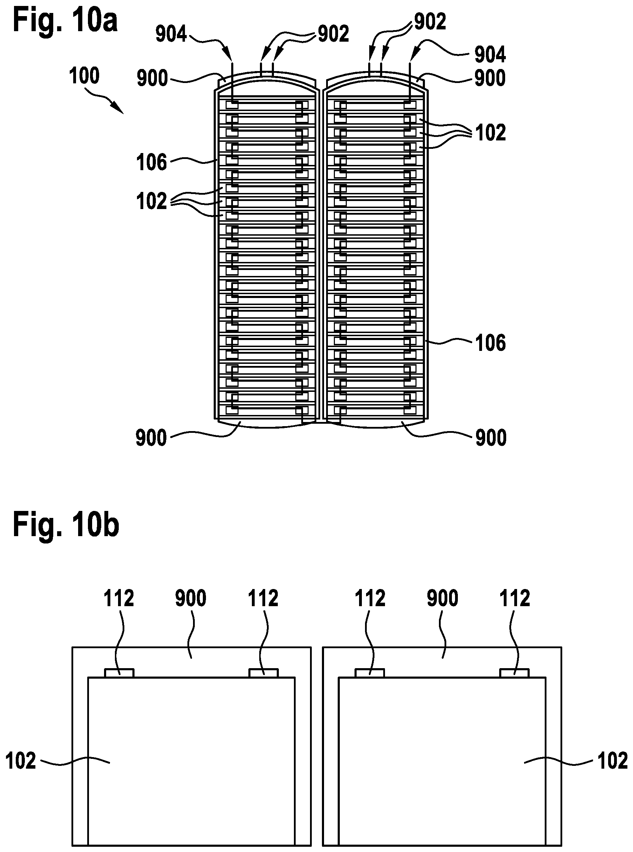

The battery module 100 may comprise two or more stacks of battery cells 102, each of the stacks arranged in and mechanically supported by a frame element 106, as shown in fig. 10a to 13b. The two or more frame elements 106 may be arranged side by side.

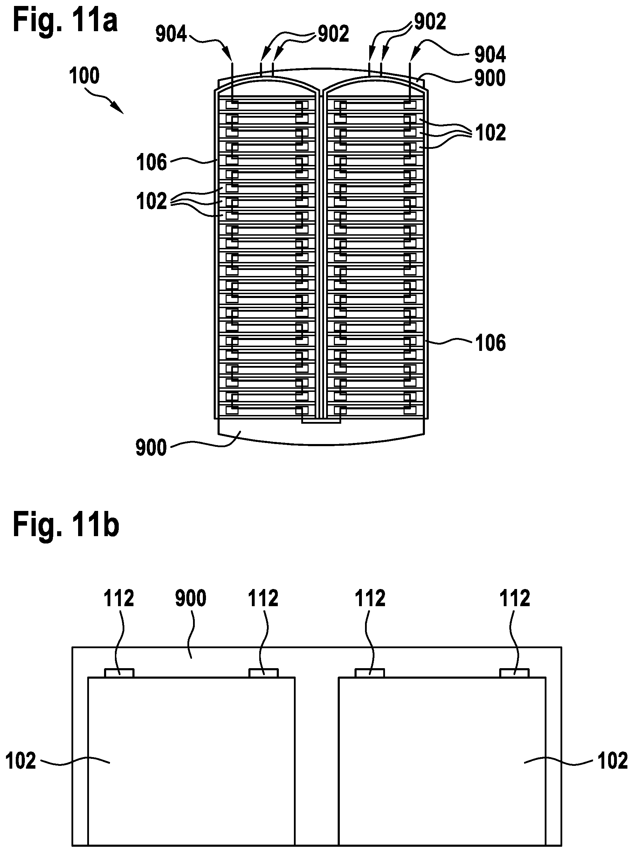

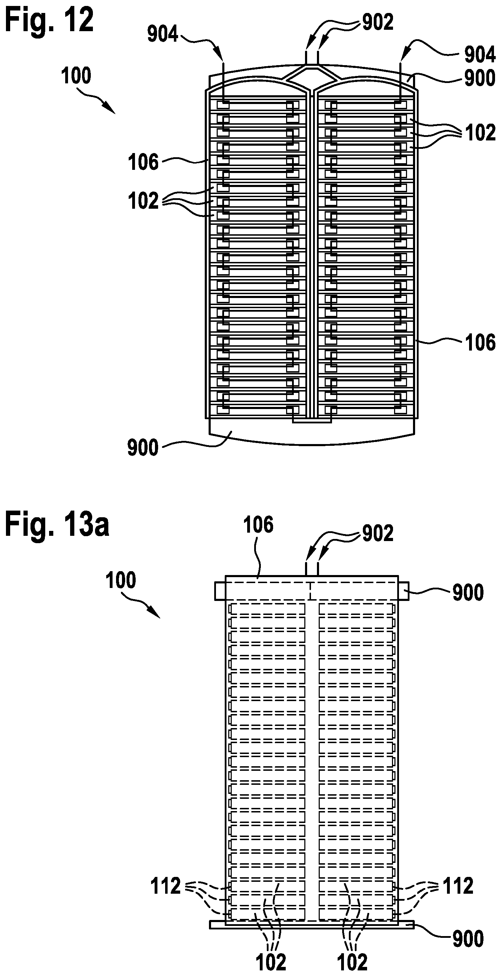

The hydraulic connectors 902 and electric connectors 904 may be arranged on one side of the battery module 100, e.g. on one of its narrow sides, as shown in fig. 10a, 11a and 12. Furthermore, all of the connectors 902 and 904 may be integrated in a single end plate 900, as shown in fig. 11a and 12. The connectors 902, 904 may also be integrated separately in one or both end plates 900.

The battery cells 102 of different stacks may be series-connected and/or parallel-connected.

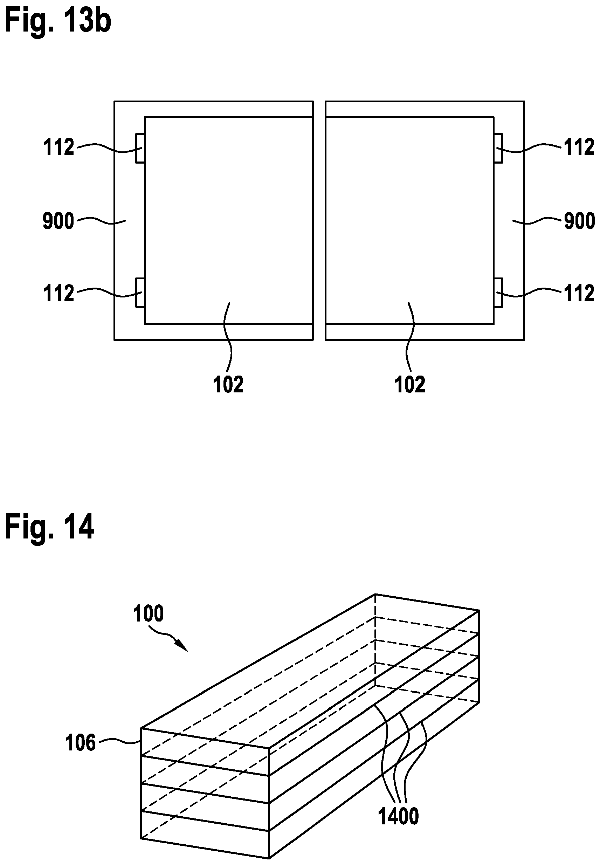

It is possible that each of the frame elements 106 has its own pair of hydraulic connectors 902, as shown in fig. 10a and 11a. Alternatively, the cooling channels 116 of different frame elements 106 may each be coupled to the same pair of hydraulic connectors 902, as shown in fig. 12 and 13a.

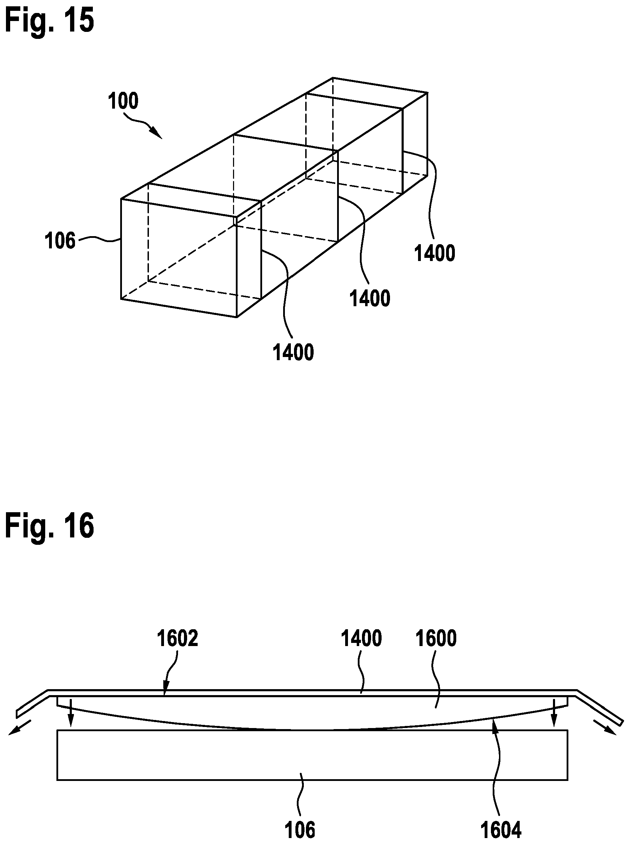

Fig. 14 schematically shows the battery module 100 with a strap tensioning system comprising compression straps 1400 which are tensioned around different portions of the frame element 106 in order to compress the frame element 106, i.e. to press the walls of the frame element 106 against the battery cells 102. In fig. 14, three compression straps 1400 are each tensioned around the narrow side and the wide side of the frame element 106. Alternatively, the compression straps 1400 may be tensioned solely around the wide side of the frame element 106, as shown in fig. 15. The compression straps 1400 may be reinforced or non-reinforced polymeric or metal parts.

It may be that one compression strap 1400 is tensioned around two or more frame elements 106, such as the frame elements 106 shown in fig. 10a to 13b.

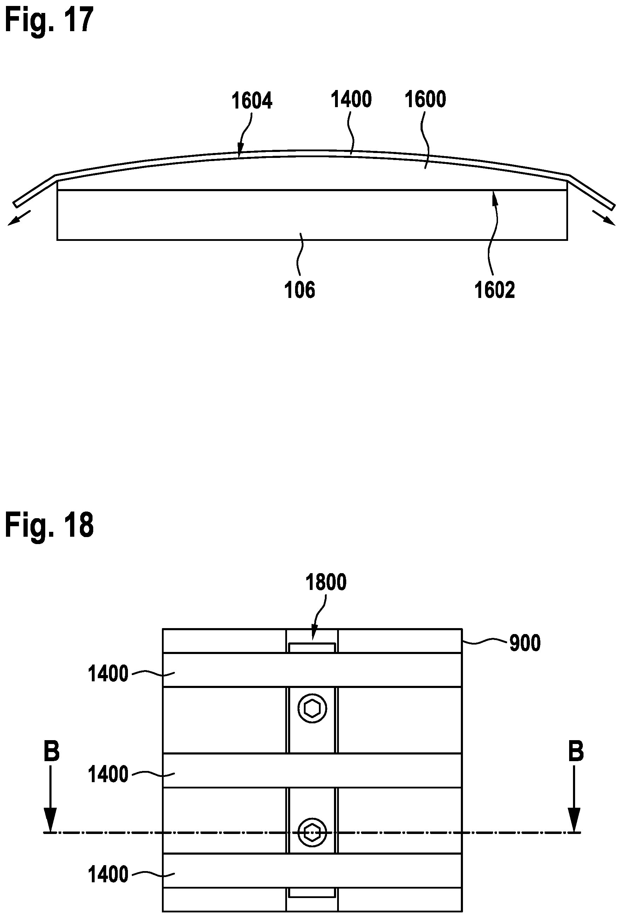

The compression straps 1400 may each be supported by one or more strap supports 1600, as shown on fig. 16 and 17. The strap supports 1600 are arranged between the compression straps 1400 and an outer surface of the frame element 106. Each of the strap supports 1600 may have a flat side 1602 and a convex side 1604 to evenly distribute the pressure caused by the tensioned compression straps 1400 over the surface of the frame element 106.

For example, the convex side 1604 may face the frame element 106 and the flat side 1602 may face the compression strap 1400 such that the strap support 1600 is bent at its ends towards the frame element 106 when the compression strap 1400 is tensioned (indicated by arrows in fig. 16).

However, it is also possible that the convex side 1604 faces the compression strap 1400, whereas the flat side 1602 faces the frame element 106 (see fig. 17).

Each of the compression straps 1400 may run across one or both end plates 900. In at least one of the end plates 900, a tensioning device 1800 for adjusting the tension of the compression straps 1400 may be integrated, as shown in fig. 18.

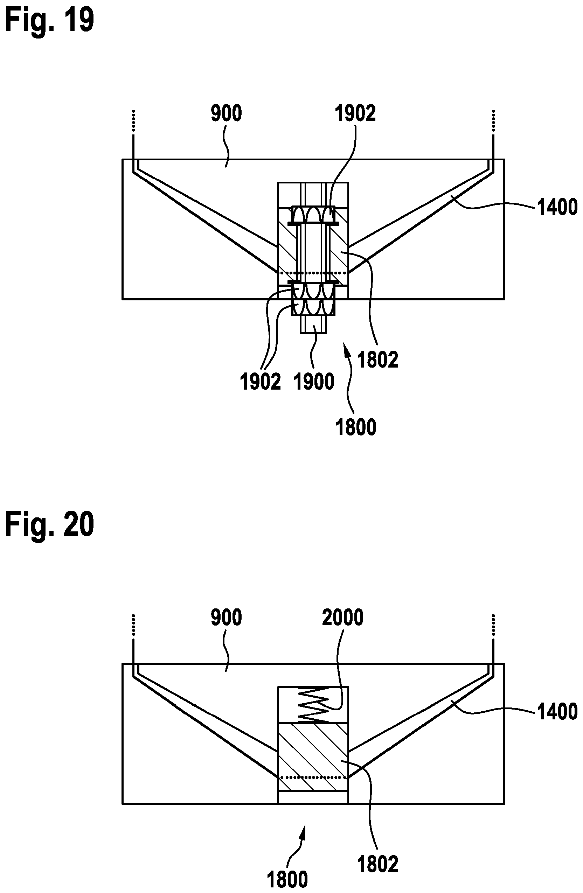

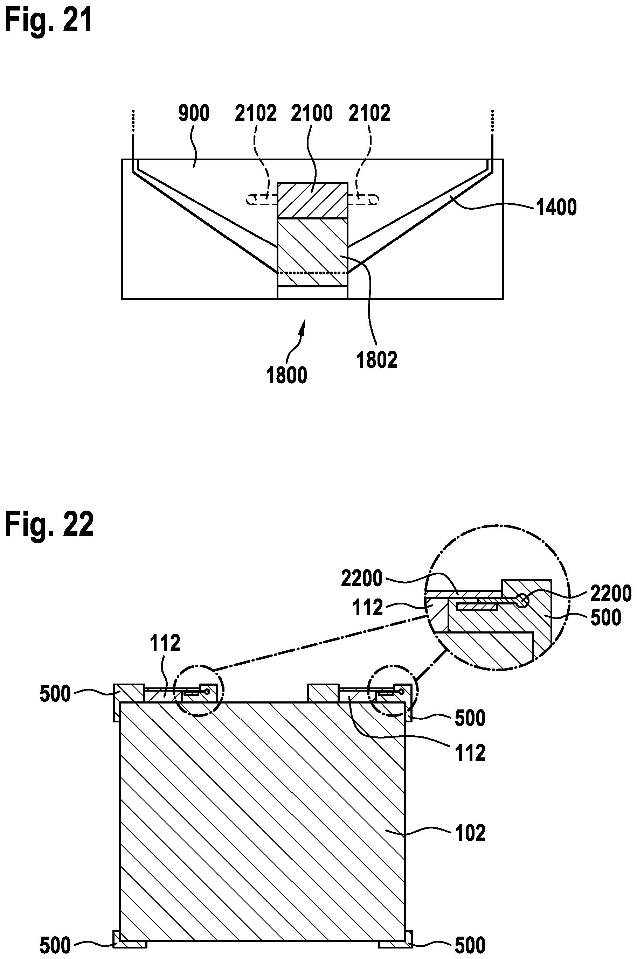

The tensioning device 1800 may comprise a movable stop 1802 and means for pressing the stop 1802 against the compression straps 1400, such as a screw 1900 with nuts 1902 (see fig. 19), a spring 2000 (see fig. 20) or a polymer filling 2100 (see fig. 21) filled into a cavity of the end plate 900 via an injection hole 2102.

Alternatively or additionally to the compression straps 1400, a beam made of a higher-strength material and with an appropriate shape having a relatively high area moment of inertia, such as a U-shape, may be used to apply uniform compression force over the entire length of the frame element 106. Such a beam may for example be mounted directly on the end plates 900 by screws or other means of tensioning and fixation.

Fig. 22 schematically shows a front view of a battery cell arrangement, where each battery cell 102 is clipped into the cell holder 500 (see also fig. 5). The cell holder 500 may be a plastic part manufactured in an injection molding process. It is possible that interconnection elements 2200, e.g. for electrically interconnecting the terminals 112 of different battery cells 102 and/or for connecting the terminals 112 to a battery management system, are integrated in the cell holder 500, e.g. mounted to the cell holder 500 and/or embedded into a (molded) plastic material of the cell holder 500.

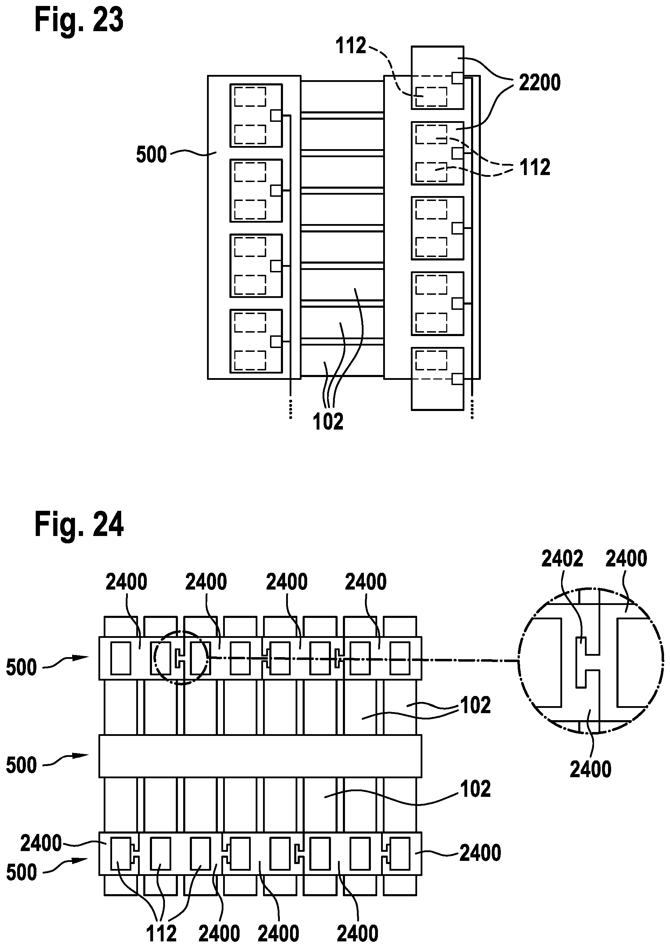

Fig. 23 shows the cell holder 500 of fig. 22 viewed from the top. The battery cells 102 may be arranged one after another in the cell holder 500. The cell holder 500 may hold the battery cells 102 in such a way that adjacent battery cells 102 are separated from each other by an air gap.

As shown in fig. 24, the cell holder 500 may be composed of a plurality of single cell holder elements 2400, each of which holding one or more battery cells 102. The cell holder elements 2400 may be mechanically interconnected to form a stack, e.g. by using snap means 2402 such as noses and corresponding recesses, which may be integral parts of the cell holder elements 2400.

While the invention has been illustrated and described in detail in the drawings and foregoing description, such illustration and description are to be considered illustrative or exemplary and not restrictive; the invention is defined by the claims. Any reference signs in the claims should not be construed as limiting the scope.

### LIST OF REFERENCE SYMBOLS

- 100: battery module
- 102: battery cell
- 104: U-shaped body
- 104': U-shaped body of further frame element
- 106: frame element
- 106': further frame element
- 108: side portion
- 108': side portion of further frame element
- 110: central portion
- 110': central portion of further frame element
- 112: terminal
- 114: cooling plate
- 114': further cooling plate
- 116: cooling channel
- 116': cooling channel of further frame element
- 118: bent portion
- 118': bent portion of further frame element
- 120: rib
- 120': rib of further frame element
- 122: ground
- 124: thermally conductive and electrically isolating material
- 400: cover
- 402: bent part of side portion
- 402': bent part of side portion of further frame element
- 500: cell holder
- 700: vent channel
- 800: channel body
- 802: channel holder
- 900: end plate
- 902: hydraulic connector
- 904: electric connector
- 1400: compression strap
- 1600: strap support
- 1602: flat side
- 1604: convex side
- 1800: tensioning device
- 1802: movable stop
- 1900: screw
- 1902: nut
- 2000: spring
- 2100: polymer filling
- 2102: injection hole
- 2200: interconnection element
- 2400: cell holder element
- 2402: snap means

## Claims

1. A battery module (100), comprising:
a plurality of battery cells (102);
a frame element (106) with a U-shaped body (104), the U-shaped body (104) mechanically supporting the battery cells (102);
wherein a central portion (110) and two side portions (108) of the U-shaped body (104) are different portions of a cooling plate (114) with an integrated cooling channel (116) for conducting a cooling fluid through the cooling plate (114), the central portion (110) connected to each of the side portions (108) via a bent portion (118) of the cooling plate (114);
wherein each of the battery cells (102) is in thermal contact with the central portion (110) and at least one of the two side portions (108) of the U-shaped body (104);
wherein the cooling plate (114) is bent in at least one of the bent portions (118) in such a way that at least one rib (120) protrudes from the U-shaped body (104);
**characterised in that** the battery module further comprises:
at least one compression element (1400) adapted for compressing the frame element (106) at a circumferential border of the frame element (106);
wherein the compression element (1400) is a compression strap (1400) tensioned around the frame element (106);
wherein at least one strap support (1600) is arranged between the compression strap (1400) and the frame element (106), the strap support (1600) having a flat side (1602) and a convex side (1604).

2. The battery module (100) of claim 1,
wherein the cooling plate (114) has a flat surface on at least one of its sides;
wherein each of the battery cells (102) is in thermal contact with the flat surface of the cooling plate (114).

3. The battery module (100) of claim 1 or 2,
wherein the rib (120) has a U-shaped or circular cross-section.

4. The battery module (100) of one of the previous claims,
wherein the cooling channel (116) runs through the central portion (110) and at least one of the two side portions (108) of the U-shaped body (104).

5. The battery module (100) of one of the previous claims, further comprising:
a vent channel (700) for conducting gases leaking from the battery cells (102), the vent channel (700) formed of a bent part (402) of at least one of the side portions (108) of the U-shaped body (104); and/or
a cover (400) for covering an open side of the frame element (106), the cover (400) formed of a bent part (402) of at least one of the side portions (108) of the U-shaped body (104).

6. The battery module (100) of one of the previous claims, further comprising:
two end plates (900) arranged at opposite sides of the frame element (106);
wherein at least one of the two end plates (900) comprises hydraulic connectors (902) hydraulically connected to the cooling channel (116, 116') and/or electric connectors (904) electrically connected to terminals (112) of each of the battery cells (102).

7. The battery module (100) of claim 6,
wherein the hydraulic connectors (902) and the electric connectors (904) are arranged on one side of the frame element (106).

8. The battery module (100) of one of the previous claims, further comprising:
two end plates (900) arranged at opposite sides of the frame element (106);
wherein the compression strap (1400) runs across the two end plates (900);
wherein at least one of the two end plates (900) comprises a tensioning device (1800) adapted for adjusting a tension of the compression strap (1400).

9. The battery module (100) of one of the previous claims, further comprising:
a further frame element (106') with a U-shaped body (104'), the U-shaped body (104') of the further frame element (106') mechanically supporting the battery cells (102);
wherein each of the battery cells (102) is arranged between the frame element (106) and the further frame element (106').

10. The battery module (100) of claim 9,
wherein a central portion (110') and two side portions (108') of the U-shaped body (104') of the further frame element (106') are different portions of a further cooling plate (114') with an integrated cooling channel (116') for conducting a cooling fluid through the further cooling plate (114'), the central portion (110') connected to each of the side portions (108') via a bent portion (118') of the further cooling plate (114');
wherein each of the battery cells (102) is in thermal contact with the central portion (110') and at least one of the two side portions (108') of the U-shaped body (104') of the further frame element (106');
wherein the further cooling plate (114') is bent in at least one of the bent portions (118') in such a way that at least one rib (120') protrudes from the U-shaped body (104') of the further frame element (106').

## Patentansprüche

1. Batteriemodul (100), das Folgendes umfasst:
mehrere Batteriezellen (102);
ein Rahmenelement (106) mit einem U-förmigen Körper (104), wobei der U-förmige Körper (104) die Batteriezellen (102) mechanisch stützt;
wobei ein zentraler Abschnitt (110) und zwei Seitenabschnitte (108) des U-förmigen Körpers (104) unterschiedliche Abschnitte einer Kühlplatte (114) mit einem integrierten Kühlkanal (116) zum Leiten eines Kühlfluids durch die Kühlplatte (114) sind, wobei der zentrale Abschnitt (110) über einen gebogenen Abschnitt (118) der Kühlplatte (114) mit jedem der Seitenabschnitte (108) verbunden ist;
wobei sich jede der Batteriezellen (102) in thermischem Kontakt mit dem zentralen Abschnitt (110) und wenigstens einem der zwei Seitenabschnitte (108) des U-förmigen Körpers (104) befindet;
wobei die Kühlplatte (114) in wenigstens einem der gebogenen Abschnitte (118) derart gebogen ist, dass wenigstens eine Rippe (120) aus dem U-förmigen Körper (104) hervorsteht;
**dadurch gekennzeichnet, dass** das Batteriemodul ferner Folgendes umfasst:
wenigstens ein Kompressionselement (1400), das zum Komprimieren des Rahmenelements (106) an einer Umfangsgrenze des Rahmenelements (106) konfiguriert ist;
wobei das Kompressionselement (1400) ein Kompressionsband (1400) ist, das um das Rahmenelement (106) herum gespannt ist;
wobei wenigstens eine Bandstütze (1600) zwischen dem Kompressionsband (1400) und dem Rahmenelement (106) angeordnet ist, wobei die Bandstütze (1600) eine flache Seite (1602) und eine konvexe Seite (1604) aufweist.

2. Batteriemodul (100) nach Anspruch 1,
wobei die Kühlplatte (114) eine flache Oberfläche auf wenigstens einer ihrer Seiten aufweist;
wobei sich jede der Batteriezellen (102) in thermischem Kontakt mit der flachen Oberfläche der Kühlplatte (114) befindet.

3. Batteriemodul (100) nach Anspruch 1 oder 2,
wobei die Rippe (120) einen U-förmigen oder kreisförmigen Querschnitt aufweist.

4. Batteriemodul (100) nach einem der vorhergehenden Ansprüche,
wobei der Kühlkanal (116) durch den zentralen Abschnitt (110) und wenigstens einen der zwei Seitenabschnitte (108) des U-förmigen Körpers (104) verläuft.

5. Batteriemodul (100) nach einem der vorhergehenden Ansprüche, das ferner Folgendes umfasst:
einen Entlüftungskanal (700) zum Leiten von Gasen, die aus den Batteriezellen (102) austreten, wobei der Entlüftungskanal (700) aus einem gebogenen Teil (402) von wenigstens einem der Seitenabschnitte (108) des U-förmigen Körpers (104) gebildet ist; und/oder
eine Abdeckung (400) zum Abdecken einer offenen Seite des Rahmenelements (106), wobei die Abdeckung (400) aus einem gebogenen Teil (402) wenigstens eines der Seitenabschnitte (108) des U-förmigen Körpers (104) gebildet ist.

6. Batteriemodul (100) nach einem der vorhergehenden Ansprüche, das ferner Folgendes umfasst:
zwei Endplatten (900), die auf gegenüberliegenden Seiten des Rahmenelements (106) angeordnet sind;
wobei wenigstens eine der zwei Endplatten (900) hydraulische Verbinder (902), die hydraulisch mit dem Kühlkanal (116, 116') verbunden sind, und/oder elektrische Verbinder (904), die elektrisch mit Anschlüssen (112) jeder der Batteriezellen (102) verbunden sind, umfasst.

7. Batteriemodul (100) nach Anspruch 6,
wobei die hydraulischen Verbinder (902) und die elektrischen Verbinder (904) auf einer Seite des Rahmenelements (106) angeordnet sind.

8. Batteriemodul (100) nach einem der vorhergehenden Ansprüche, das ferner Folgendes umfasst:
zwei Endplatten (900), die auf gegenüberliegenden Seiten des Rahmenelements (106) angeordnet sind;
wobei das Kompressionsband (1400) über die zwei Endplatten (900) hinweg verläuft;
wobei wenigstens eine der zwei Endplatten (900) eine Spannvorrichtung (1800) umfasst, die zum Anpassen einer Spannung des Kompressionsbandes (1400) eingerichtet ist.

9. Batteriemodul (100) nach einem der vorhergehenden Ansprüche, das ferner Folgendes umfasst:
ein weiteres Rahmenelement (106') mit einem U-förmigen Körper (104'), wobei der U-förmige Körper (104') des weiteren Rahmenelements (106') die Batteriezellen (102) mechanisch stützt;
wobei jede der Batteriezellen (102) zwischen dem Rahmenelement (106) und dem weiteren Rahmenelement (106') angeordnet ist.

10. Batteriemodul (100) nach Anspruch 9,
wobei ein zentraler Abschnitt (110') und zwei Seitenabschnitte (108') des U-förmigen Körpers (104') des weiteren Rahmenelements (106') unterschiedliche Abschnitte einer weiteren Kühlplatte (114') mit einem integrierten Kühlkanal (116') zum Leiten eines Kühlfluids durch die weitere Kühlplatte (114') sind, wobei der zentrale Abschnitt (110') mit jedem der Seitenabschnitte (108') über einen gebogenen Abschnitt (118') der weiteren Kühlplatte (114') verbunden ist;
wobei sich jede der Batteriezellen (102) in thermischem Kontakt mit dem zentralen Abschnitt (110') und wenigstens einem der zwei Seitenabschnitte (108') des U-förmigen Körpers (104') des weiteren Rahmenelements (106') befindet;
wobei die weitere Kühlplatte (114') in wenigstens einem der gebogenen Abschnitte (118') derart gebogen ist, dass wenigstens eine Rippe (120') aus dem U-förmigen Körper (104') des weiteren Rahmenelements (106') hervorsteht.

## Revendications

1. Module de batterie (100), comprenant :
une pluralité de cellules de batterie (102) ;
un élément d'armature (106) avec un corps en forme de U (104), le corps en forme de U (104) supportant mécaniquement les cellules de batterie (102) ;
dans lequel une partie centrale (110) et deux parties latérales (108) du corps en forme de U (104) sont des parties différentes d'une plaque de refroidissement (114) avec un canal de refroidissement intégré (116) servant à acheminer un fluide de refroidissement à travers la plaque de refroidissement (114), la partie centrale (110) étant reliée à chacune des parties latérales (108) par le biais d'une partie pliée (118) de la plaque de refroidissement (114) ;
dans lequel chacune des cellules de batterie (102) est en contact thermique avec la partie centrale (110) et au moins une des deux parties latérales (108) du corps en forme de U (104) ;
dans lequel la plaque de refroidissement (114) est pliée dans au moins une des parties pliées (118) de telle sorte qu'au moins une arête (120) dépasse du corps en forme de U (104) ;
**caractérisé en ce que** le module de batterie comprend en outre :
au moins un élément de compression (1400) adapté pour comprimer l'élément d'armature (106) au niveau d'un bord circonférentiel de l'élément d'armature (106) ;
dans lequel l'élément de compression (1400) est une sangle de compression (1400) tendue autour de l'élément d'armature (106) ;
dans lequel au moins un support de sangle (1600) est disposé entre la sangle de compression (1400) et l'élément d'armature (106), le support de sangle (1600) ayant un côté plat (1602) et un côté convexe (1604).

2. Module de batterie (100) de la revendication 1,
dans lequel la plaque de refroidissement (114) présente une surface plate sur au moins un de ses côtés ;
dans lequel chacune des cellules de batterie (102) est en contact thermique avec la surface plate de la plaque de refroidissement (114).

3. Module de batterie (100) de la revendication 1 ou 2,
dans lequel l'arête (120) présente une section transversale en forme de U ou circulaire.

4. Module de batterie (100) d'une des revendications précédentes,
dans lequel le canal de refroidissement (116) chemine à travers la partie centrale (110) et au moins une des deux parties latérales (108) du corps en forme de U (104).

5. Module de batterie (100) d'une des revendications précédentes, comprenant en outre :
un canal d'évacuation (700) servant à acheminer les gaz s'échappant des cellules de batterie (102), le canal d'évacuation (700) étant constitué d'une partie pliée (402) d'au moins une des parties latérales (108) du corps en forme de U (104) ; et/ou
un couvercle (400) servant à recouvrir un côté ouvert de l'élément d'armature (106), le couvercle (400) étant constitué d'une partie pliée (402) d'au moins une des parties latérales (108) du corps en forme de U (104).

6. Module de batterie (100) d'une des revendications précédentes, comprenant en outre :
deux plaques d'extrémité (900) disposées sur des côtés opposés de l'élément d'armature (106) ;
dans lequel au moins une des deux plaques d'extrémité (900) comprend des raccords hydrauliques (902) raccordés hydrauliquement au canal de refroidissement (116, 116') et/ou des connecteurs électriques (904) connectés électriquement à des bornes (112) de chacune des cellules de batterie (102).

7. Module de batterie (100) de la revendication 6,
dans lequel les raccords hydrauliques (902) et les connecteurs électriques (904) sont disposés sur un côté de l'élément d'armature (106).

8. Module de batterie (100) d'une des revendications précédentes, comprenant en outre :
deux plaques d'extrémité (900) disposées sur des côtés opposés de l'élément d'armature (106) ;
dans lequel la sangle de compression (1400) chemine d'un bout à l'autre des deux plaques d'extrémité (900) ;
dans lequel au moins une des deux plaques d'extrémité (900) comprend un dispositif de tension (1800) adapté pour régler une tension de la sangle de compression (1400).

9. Module de batterie (100) d'une des revendications précédentes, comprenant en outre :
un autre élément d'armature (106') avec un corps en forme de U (104'), le corps en forme de U (104') de l'autre élément d'armature (106') supportant mécaniquement les cellules de batterie (102) ;
dans lequel chacun des éléments de batterie (102) est disposé entre l'élément d'armature (106) et l'autre élément d'armature (106').

10. Module de batterie (100) de la revendication 9,
dans lequel une partie centrale (110') et deux parties latérales (108') du corps en forme de U (104') de l'autre élément d'armature (106') sont des parties différentes d'une autre plaque de refroidissement (114') avec un canal de refroidissement intégré (116') servant à acheminer un fluide de refroidissement à travers l'autre plaque de refroidissement (114'), la partie centrale (110') étant reliée à chacune des parties latérales (108') par le biais d'une partie pliée (118') de l'autre plaque de refroidissement (114') ;
dans lequel chacune des cellules de batterie (102) est en contact thermique avec la partie centrale (110') et au moins une des deux parties latérales (108') du corps en forme de U (104') de l'autre élément d'armature (106') ;
dans lequel l'autre plaque de refroidissement (114') est pliée dans au moins une des parties pliées (118') de telle sorte qu'au moins une arête (120') dépasse du corps en forme de U (104') de l'autre élément d'armature (106').
